# EUROPÄISCHE PATENTSCHRIFT

(11) **EP 1 917 172 B1**
(45) Veröffentlichungstag und Bekanntmachung des Hinweises auf die Patenterteilung: **27.05.2009**
(21) Anmeldenummer: 06792216.1
(22) Anmeldetag: 22.09.2006
(51) Int. Cl.: B60W 30/12, B60R 21/00

(54) **WARNSYSTEM FÜR EIN KRAFTFAHRZEUG**
WARNING SYSTEM FOR A MOTOR VEHICLE
SYSTÈME D'ALERTE POUR UN VÉHICULE AUTOMOBILE

(30) Priorität: 30.11.2005 DE 102005058130
(43) Veröffentlichungstag der Anmeldung: 07.05.2008
(73) Patentinhaber: Valeo Schalter und Sensoren GmbH, 74321 Bietigheim-Bissingen (DE)
(72) Erfinder: MATHES, Joachim, 74080 Heilbronn (DE)
(74) Vertreter: Bulling, Alexander
(86) Internationale Anmeldenummer: PCT/EP2006/009210
(87) Internationale Veröffentlichungsnummer: WO 2007/062707

(56) Entgegenhaltungen:
- EP-A2- 1 407 916
- EP-A2- 1 531 113
- WO-A-03/094130
- US-A- 5 835 028
- US-A1- 2004 042 638
- US-A1- 2004 230 375

## Beschreibung

Die Erfindung betrifft ein Warnsystem für ein Kraftfahrzeug, mit einer Sensorik zur Erfassung der Lage des Kraftfahrzeugs relativ zu einer auf einer Fahrbahn aufgetragenen Fahrbahnbegrenzung, mit einer mit der Sensorik gekoppelten Auswerteeinheit, wobei die Auswerteeinheit mit mindestens einer Ausgabeeinheit und/oder mit mindestens einem Aktuator zur Ausgabe von Warnsignalen an den Fahrer gekoppelt ist.

Solche Warnsystem sind beispielsweise aus Fahrzeugen der Firma Citroën bekannt. Diese Systeme dienen dazu, den Fahrer eines Kraftfahrzeugs zu warnen, wenn dieser eine Fahrbahnbegrenzung überfährt. Ein unbeabsichtigtes Überfahren von Fahrbahnbegrenzungen, also ein unbeabsichtigter Wechsel einer Fahrspur, kann auftreten, wenn der Fahrer des Kraftfahrzeugs abgelenkt oder ermüdet ist. Bei Überschreiten einer Fahrbahnbegrenzung wird ein Warnsignal ausgegeben, dass dem Fahrer signalisiert, dass er seine Fahrspur verlässt.

Es gibt Situationen, in denen es auch für einen sehr aufmerksamen Fahrer schwierig ist, das Fahrzeug innerhalb einer Fahrspur zu halten. Dies kann beispielsweise bei vergleichsweise breiten Fahrzeugen der Fall sein, die auf einer sehr schmalen Fahrspur bewegt werden, beispielsweise im Bereich von Autobahnbaustellen. Ein weiteres Beispiel sind zueinander parallele Abbiegespuren in einem Kreuzungsbereich. In solchen Situationen kann es für den Fahrer eines Kraftfahrzeugs störend sein, wenn ein Warnsignal zu häufig ausgelöst wird. Aus diesem Grunde sind die bekannten Warnsysteme auch abschaltbar.

Aus der EP 1 407 916 A2, als nächstliegenden Stand den Technik betrachtet, ist ein Kraftfahrzeug mit einer Einrichtung zur Erfassung von Fahrbahnmarkierungen bekannt, bei welchem ein Fahrer in Abhängigkeit davon, ob er eine Fahrbahnmarkierung mit der rechten oder mit der linken Fahrzeugseite überfährt, eine seitenspezifische Warninformation erhält.

Aus der US 2004/0042638 A1 ist ein Verfahren zum Erfassen einer Fahrspurmarkierung bekannt, bei welchem unterschiedliche Alarmklänge in Abhängigkeit eines Abstands zwischen einer Fahrbahnmarkierung und einem Kraftfahrzeug ausgelöst werden.

Hiervon ausgehend liegt der vorliegenden Erfindung die Aufgabe zugrunde, ein eingangs beschriebenes Warnsystem für ein Kraftfahrzeug dahingehend zu verbessern, dass es in einem eingeschalteten Zustand einen für den Fahrer angenehmeren Betrieb gewährleistet.

Diese Aufgabe wird erfindungsgemäß durch ein Warnsystem mit den Merkmalen des Patentanspruchs 1 gelöst. Hierdurch ist es möglich, dem Fahrer nicht nur ein irgendwie geartetes Warnsignal zu geben, dass ein unbeabsichtigter Spurwechsel droht, sondern die Warnsignalen können verschiedenen Verkehrssituationen angepasst sein. Hierdurch steigt die Akzeptanz des Systems und somit auch die zu erwartende Einschaltdauer.

Darüber hinaus ist es vorteilhaft, dass durch die Anpassung der Warnsignale an verschiedene Relativlagen des Kraftfahrzeugs zur Fahrbahnbegrenzung vermieden werden kann, dass ein Warnsignal eine zu starke oder zu niedrige Intensität hat. Wenn nur ein Warnsignal zur Verfügung steht, muss dieses so ausgelegt sein, dass es im Zweifelsfall geeignet ist, den Fahrer auch aus einem "Sekundenschlaf-Zustand" herauszuholen. Ein solches Warnsignal muss jedoch vergleichsweise stark sein, so dass es in den meisten Verkehrssituationen von dem Fahrer des Kraftfahrzeugs als zu intensiv und somit als störend empfunden wird.

Durch die erfindungsgemäße Anpassung der Warnsignale hinsichtlich ihrer Art und/oder ihrer Intensität können diese Probleme vermieden werden.

Nach einer Weiterbildung der Erfindung wird vorgeschlagen, dass die zu erfassenden Relativlagen mindestens eine Relativlage umfassen, in der mindestens ein Rad des Kraftfahrzeugs die Fahrbahnbegrenzung vollständig überschreitet. Diese Relativlage beschreibt also den Zustand, in der sich zumindest ein Rad des Kraftfahrzeugs bereits auf einer benachbarten Fahrspur oder nach Überschreiten einer Fahrbahngrenze bereits an dem Fahrbahnrand befindet. Diesem Zustand ist zweckmäßigerweise ein vergleichsweise auffälliges und/oder intensives Warnsignal zugeordnet.

Weiterhin wird vorgeschlagen, dass die zu erfassenden Relativlagen mindestens eine Relativlage umfassen, in der mindestens ein Rad des Kraftfahrzeugs die Fahrbahnbegrenzung zumindest abschnittsweise überdeckt. Da in einer solchen Verkehrssituation das Kraftfahrzeug weniger stark in eine benachbarte Fahrspur oder in den Randbereich einer Fahrbahn hineinragt, ist es zweckmäßig, dieser Relativlage ein Warnsignal zuzuordnen, dass weniger intensiv ist. Somit ist auch gewährleistet, dass der Fahrer diese Warnsignale nicht als störend empfindet.

Die Sensorik und die Auswerteeinheit sind ausgebildet, den Grad der Überdeckung des Rades und der Fahrbahnbegrenzung zu ermitteln. Somit können Relativlagen ermittelt werden, beginnend mit einer leichten Berührung eines Rades des Kraftfahrzeugs mit einer Fahrbahnbegrenzung bis hin zu einer vollständigen Überdeckung. Diesen verschiedenen Relativlagen werden dann Warnsignale unterschiedlicher Art und/oder Intensität zugeordnet.

Nach einer bevorzugten Ausführungsform der Erfindung ist die Zuordnung von verschiedenen Relativlagen zu Warnsignalen unterschiedlicher Intensität proportional. Eine solche Proportionalität kann beispielweise durch eine entsprechend ansteigende Lautstärke erreicht werden.

Es ist auch möglich, dass einer Relativlage, in der ein Rad des Kraftfahrzeugs die Fahrbahnbegrenzung zumindest abschnittsweise überdeckt, ein Warnsignal erster Art zugeordnet ist, und dass einer Relativlage, in der mindestens ein Rad des Kraftfahrzeugs die Fahrbegrenzung vollständig überschreitet, ein Warnsignal zweiter Art zugeordnet ist. Beispielsweise kann ein Warnsignal erster Art akustische Signale umfassen, die beispielsweise über einen Lautsprecher ausgegeben werden, während die Warnsignale zweiter Art haptische Signale betreffen, die dem Fahrer durch Vibration von Sitzteilen und/oder eines Lenkrades mitgeteilt werden können. Selbstverständlich können jeder Relativlage auch gleichzeitig Warnsignale verschiedener Arten zugeordnet sein, so beispielweise einer ersten Relativlage akustische und optische Warnsignale und einer zweiten Relativlage akustische und haptische Warnsignale.

Die Zuordnung von verschiedenen Arten von Warnsignalen ist auch für Relativlagen möglich, in denen ein Rad des Kraftfahrzeugs die Fahrbahnbegrenzung mit unterschiedlichen Überdeckungsgraden überdeckt.

Die Erfindung betrifft auch ein Verfahren zum Betrieb eines beschriebenen Warnsystems, wobei die Intensität eines Warnsignals abgeschwächt oder die Ausgabe des Warnsignals abgebrochen wird, wenn mindestens ein vorgebbarer Referenzzustand erreicht ist. Ein solcher Referenzzustand kann erreicht sein, wenn mindestens ein Rad des Kraftfahrzeugs eine Fahrbahnbegrenzung vollständig überschritten hat. Ein solcher Referenzzustand kann auch erreicht sein, wenn dieser der vollständigen Überschreitung der Fahrbahnbegrenzung aller Räder des Kraftfahrzeugs entspricht. In einem solchen Fall kann davon ausgegangen werden, dass der Spurwechsel beabsichtigt war und somit die Ausgabe von Warnsignalen nicht mehr sinnvoll ist.

Der Referenzzustand kann auch dem Ablauf eines Zeitlimits entsprechen. So können die Signale nach Ablauf einer gewissen Zeitdauer abgeschwächt oder abgebrochen werden, um den Fahrer nicht zu lang mit Warnsignalen zu belasten.

Der Referenzzustand kann auch der Zurücklegung einer Mindeststrecke entsprechen. Wenn beispielsweise das Kraftfahrzeug eine gewisse Weglänge auf einer benachbarten Spur zurückgelegt hat, obwohl Warnsignale ausgegeben worden sind, kann davon ausgegangen werden, dass der teilweise oder vollständige Fahrbahnwechsel beabsichtigt war.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist. Dabei können die in der Zeichnung gezeigten sowie in den Ansprüchen sowie in der Beschreibung erwähnten Merkmale jeweils einzeln für sich oder in beliebiger Kombination erfindungswesentlich sein. In der Zeichnung zeigen:
- Figur 1: eine Draufsicht eines Kraftfahrzeugs; das auf einer Fahrbahn mit Fahrbahnbegrenzungen angeordnet ist;
- Figur 2: eine Vorderansicht eines geringen Überdeckungsgrads eines Rades des Kraftfahrzeugs gemäß Figur 1 mit einer Fahrbahnbegrenzung;
- Figur 3: eine der Figur 2 entsprechende Ansicht bei einem maximalen Überdeckungsgrad; und
- Figur 4: ein Diagramm zur Veranschaulichung der Zuordnung von verschiedenen Relativpositionen von Kraftfahrzeug und Fahrbahnbegrenzung einerseits und Intensität eines Warnsignals andererseits.

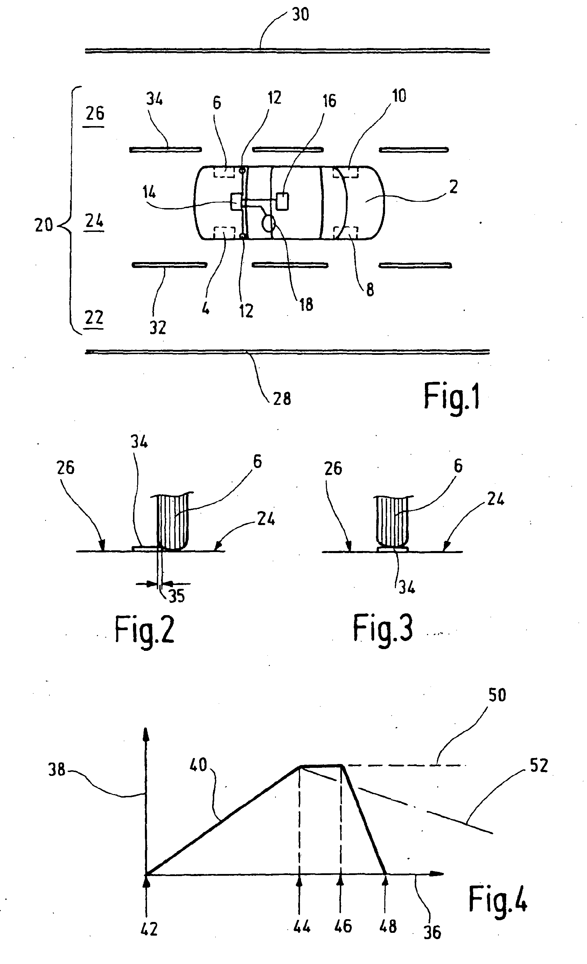

In Figur 1 ist ein Kraftfahrzeug schematisch dargestellt und mit dem Bezugszeichen 2 bezeichnet. Das Kraftfahrzeug 2 weist ein linkes Vorderrad 4, ein rechtes Vorderrad 6, ein linkes Hinterrad 8 sowie ein rechtes Hinterrad 10 auf. Das Kraftfahrzeug 2 ist ferner mit einer Sensorik 12 ausgestattet, die es ermöglicht, die Lage des Kraftfahrzeugs 2 relativ zu Fahrbahnbegrenzungen erfassen zu können. Hier können beispielsweise Infrarot-Sensoren eingesetzt werden.

Die Sensorik 12 ist mit einer Auswerteeinheit 14 gekoppelt, die die von der Sensorik 12 ermittelten Signale auswertet. Die Auswerteinheit 14 ist mit einer Ausgabeeinheit 16 sowie mit einem Aktuator 18 gekoppelt. Die Ausgabeeinheit 16 kann einen Lautsprecher und/oder einen Bildschirm umfassen, so dass dem Fahrer Warnsignale akustischer und/oder optischer Art mitgeteilt werden können. Der Aktuator kann durch ein Vibrationselement gebildet sein, dass beispielsweise mit dem Lenkrad und/oder mit Kraftfahrzeugsitzteilen gekoppelt ist.

Das Kraftfahrzeug 2 ist auf einer insgesamt mit 20 bezeichneten Fahrbahn angeordnet. Die Fahrbahn 20 umfasst eine linke Fahrspur 22, eine mittlere Fahrspur 24 sowie eine rechte Fahrspur 26. Die Fahrbahn 20 ist insgesamt linker Hand durch die Fahrbahnbegrenzung 28 und rechter Hand durch die Fahrbahnbegrenzung 30 begrenzt. Diese Begrenzungen sind in üblicher Weise durchgehende, einige Zentimeter breite Markierungen. Diese sind in üblicher Weise weiß oder gelb eingefärbt. Zwischen den Fahrspuren 22 und 24 einerseits und 24 und 26 andererseits sind mittlere Fahrbahnbegrenzungen 32 und 34 angeordnet. Diese sind in üblicher Weise nicht durchgängig, sondern unterbrochen ausgeführt, um dem Fahrer anzuzeigen, dass er in diesem Bereich auf benachbarte Fahrspuren wechseln darf. Die Begrenzungen oder Markierungen 32 und 34 sind ebenfalls in üblicher Weise auf die Fahrbahn 20 aufgetragen.

Wenn das Kraftfahrzeug 2 die Fahrspur 24 in Richtung der Fahrspur 26 verlässt, gerät das rechte Vorderrad 6 in Kontakt mit der mittleren Fahrbahnbegrenzung 34, wie dies in Figur 2 dargestellt ist. Hierbei überdecken sich die Lauffläche des Reifens des Rades 6 und die Fahrbahnbegrenzung 34 mit einem geringen Überdeckungsgrad 35. Bei weiterer Bewegung des Kraftfahrzeugs 2 in Richtung auf die Fahrspur 26 überdecken sich das Rad 6 und die Fahrbahnbegrenzung 34 vollständig (siehe Figur 3).

Der in Figur 2 dargestellten Relativlage zwischen Kraftfahrzeug 2 und Fahrbahnbegrenzung 34 ist ein Warnsignal geringerer Intensität zugeordnet als der in Figur 3 dargestellten Situation. Dies wird im Folgenden noch detaillierter mit Bezug auf Figur 4 beschrieben. Das dort dargestellte Diagramm weist eine x-Achse 36 sowie eine y-Achse 38 auf. Der x-Achse 36 sind verschiedene Relativlagen des Kraftfahrzeugs 2 zu einer Fahrbahnbegrenzung, beispielsweise der Fahrbahnbegrenzung 34, zugeordnet. Der y-Achse 38 sind Warnsignale unterschiedlicher Intensität zugeordnet. '

Die Zuordnung erfolgt über eine Funktion 40. Diese beginnt in einem Zustand 42, die dem Zustand entspricht, der in Figur 2 dargestellt ist (Beginn der Überdeckung des Rades 6 mit der Fahrbahnbegrenzung 34). Die Intensität des Warnsignals steigt bis hin zu einem Zustand 44, der der in Figur 3 dargestellten vollständigen Überdeckung von Rad 6 und Fahrbahnbegrenzung 34 entspricht. Zwischen den Zuständen 42 und 44 steigt die Intensität des Warnsignals proportional. Das Warnsignal selbst kann optischer und/oder akustischer und/oder haptischer Art sein.

Nach Erreichen des Zustands 44 wird die Intensität des Warnsignals nicht weiter gesteigert. Sie verharrt bis hin zu einem Zustand 46 auf einem hohen Niveau. Der Zustand 46 kann erreicht sein, wenn das Vorderrad 6 die Fahrbahnbegrenzung 34 vollständig überschritten hat, so dass sich das Rad 6 vollständig auf der Fahrbahn 26 befindet oder wenn alle Räder 4 bis 10 die Fahrbahnbegrenzung 34 vollständig überschritten haben. Der Zustand 46 kann auch erreicht sein, wenn ein vorgegebenes Zeitlimit abgelaufen ist. Ebenfalls ist es möglich, dass der Zustand 46 erreicht ist, wenn das Fahrzeug 2 eine Mindeststrecke zurückgelegt hat. Nach Erreichen des Zustands 46 kann die Intensität des Warnsignals abgeschwächt werden, bis der Zustand 48 erreicht ist.

Selbstverständlich ist es möglich, dass die Funktion 40 variiert wird, beispielsweise gemäß der Funktion 50 die Haltedauer verlängert wird oder gemäß der Funktion 52 keine Haltedauer vorgesehen ist und das Warnsignal hinsichtlich seiner Intensität direkt nach Erreichen eines Maximums wieder abgeschwächt wird.

## Patentansprüche

1. Warnsystem für ein Kraftfahrzeug (2), mit einer Sensorik (12) zur Erfassung der Lage des Kraftfahrzeugs (2) relativ zu einer auf einer Fahrbahn (20) aufgetragenen Fahrbahnbegrenzung (28-34), mit einer mit der Sensorik (12) gekoppelten Auswerteeinheit (14), wobei die Auswerteeinheit (14) mit mindestens einer Ausgabeeinheit (16) und/oder mit mindestens einem Aktuator (18) zur Ausgabe von Warnsignalen an den Fahrer gekoppelt ist, wobei verschiedenen Relativlagen des Kraftfahrzeugs (2) zu einer Fahrbahnbegrenzung (28-34) Warnsignale unterschiedlicher Art und/oder Intensität zugeordnet sind, **dadurch gekennzeichnet, dass** die Sensorik (12) und die Auswerteeinheit (14) ausgebildet sind, den Grad der Überdeckung des Rades (4-10) und der Fahrbahnbegrenzung (28-34) zu ermitteln, dass einer Relativlage, in der ein Rad (4-10) des Kraftfahrzeugs (2) die Fahrbahnbegrenzung (28-34) mit einem ersten, kleineren Überdeckungsgrad (35) abschnittsweise überdeckt, ein Warnsignal erster Art und/oder Intensität zugeordnet ist, und dass einer Relativlage, in der ein Rad (4-10) des Kraftfahrzeugs (2) die Fahrbahnbegrenzung (28-34) mit einem zweiten, größeren Überdeckungsgrad zumindest abschnittsweise überdeckt, ein Warnsignal zweiter Art und/oder Intensität zugeordnet ist.

2. Warnsystem nach Anspruch 1, **dadurch gekennzeichnet, dass** die zu erfassenden Relativlagen mindestens eine Relativlage umfassen, in der mindestens ein Rad (4-10) des Kraftfahrzeugs (2) die Fahrbahnbegrenzung (28-34) vollständig überschreitet.

3. Warnsystem nach mindestens einem der vorhergehenden Ansprüche, **dadurch gekennzeichnet, dass** einer Relativlage, in der ein Rad (4-10) des Kraftfahrzeugs (2) die Fahrbahnbegrenzung (28-34) zumindest abschnittsweise überdeckt, ein Warnsignal geringerer Intensität zugeordnet ist, als einer Relativlage, in der mindestens ein Rad (4-10) des Kraftfahrzeugs (2) die Fahrbahnbegrenzung (28-34) vollständig überschreitet.

4. Warnsystem nach mindestens einem der vorhergehenden Ansprüche, **dadurch gekennzeichnet, dass** einer Relativlage, in der ein Rad (4-10) des Kraftfahrzeugs (2) die Fahrbahnbegrenzung (28-34) mit einem ersten, kleineren Überdeckungsgrad (35) abschnittsweise überdeckt, ein Warnsignal geringerer Intensität zugeordnet ist, als einer Relativlage, in der ein Rad (4-10) des Kraftfahrzeugs (2) die Fahrbahnbegrenzung (28-34) mit einem zweiten, größeren Überdeckungsgrad zumindest abschnittsweise überdeckt.

5. Warnsystem nach mindestens einem der vorhergehenden Ansprüche, **dadurch gekennzeichnet, dass** die Zuordnung von verschiedenen Relativlagen zu Warnsignalen unterschiedlicher Intensität proportional ist.

6. Warnsystem nach mindestens einem der vorhergehenden Ansprüche, **dadurch gekennzeichnet, dass** einer Relativlage, in der ein Rad (4-10) des Kraftfahrzeugs (2) die Fahrbahnbegrenzung (28-34) zumindest abschnittsweise überdeckt, ein Warnsignal erster Art zugeordnet ist, und dass einer Relativlage, in der mindestens ein Rad (4-10) des Kraftfahrzeugs (2) die Fahrbahnbegrenzung (28-34) vollständig überschreitet, ein Warnsignal zweiter Art zugeordnet ist.

7. Warnsystem nach mindestens einem der vorhergehenden Ansprüche, **dadurch gekennzeichnet, dass** mindestens ein Warnsignal akustischer Art ist.

8. Warnsystem nach mindestens einem der vorhergehenden Ansprüche, **dadurch gekennzeichnet, dass** mindestens ein Warnsignal optischer Art ist.

9. Warnsystem nach mindestens einem der vorhergehenden Ansprüche, **dadurch gekennzeichnet, dass** mindestens ein Warnsignal haptischer Art ist.

10. Verfahren zum Betrieb eines Warnsystems nach mindestens einem der vorhergehenden Ansprüche, **dadurch gekennzeichnet, dass** die Intensität eines Warnsignals abgeschwächt oder die Ausgabe des Warnsignals abgebrochen wird, wenn mindestens ein vorgebbarer Referenzzustand (44, 46) erreicht ist.

11. Verfahren nach Anspruch 10, **dadurch gekennzeichnet, dass** der Referenzzustand (44, 46) der vollständigen Überschreitung der Fahrbahnbegrenzung (28-34) mindestens eines Rades (4-10) des Kraftfahrzeugs (2) entspricht.

12. Verfahren nach Anspruch 10 oder 11, **dadurch gekennzeichnet, dass** der Referenzzustand (44, 46) der vollständigen Überschreitung der Fahrbahnbegrenzung (28-34) aller Räder (4-10) des Kraftfahrzeugs (2) entspricht.

13. Verfahren nach mindestens einem der Ansprüche 10 bis 12, **dadurch gekennzeichnet, dass** der Referenzzustand (44, 46) dem Ablauf eines Zeitlimits entspricht.

14. Verfahren nach mindestens einem der Ansprüche 10 bis 13, **dadurch gekennzeichnet, dass** der Referenzzustand (44, 46) der Zurücklegung einer Mindeststrecke entspricht.

## Claims

1. A warning system for a motor vehicle (2), the warning system comprising: a sensor system (12) for sensing the position of the motor vehicle (2) relative to a highway delimitation (18-34) which is marked on a highway (20); an evaluation unit (14) coupled to the sensor system (12), wherein for the output of warning signals to a driver the evaluation unit (14) is coupled with an output unit (16) and/or an actuator (18), wherein warning signals of different types and/or intensities are assigned to different relative positions of the motor vehicle (2) to a highway delimitation (18-34), **characterized in that** the sensor system (12) and the evaluation unit (14) are configured to evaluate the degree of overlap of the wheel (4-10) and the highway delimitation (18-34), **in that** a warning signal of a first type and/or intensity is assigned to a relative position, in which a wheel (4-10) of the motor vehicle (2) partially covers the highway delimitation (18-34) with a first, lesser degree of overlap (35) and **in that** a warning signal of a second type and/or intensity is assigned to a relative position, in which a wheel (4-10) of the motor vehicle (2) at least partially covers the highway delimitation (18-34) with a second, higher degree of overlap.

2. The warning system according to claim 1, **characterized in that** the relative positions to be sensed include at least one relative position in which at least one wheel (4-10) of the motor vehicle (2) completely crosses the highway delimitation (18-34).

3. The warning system according to one of the preceding claims, **characterized in that** a warning signal assigned to a relative position in which a wheel (4-10) of the motor vehicle (2) at least partially covers the highway delimitation has a lower intensity than a warning signal assigned to a relative position in which at least one wheel (4-10) of the motor vehicle (2) completely crosses the highway delimitation (18-34).

4. The warning system according to one of the preceding claims, **characterized in that** a warning signal assigned to a relative position in which a wheel (4-10) of the motor vehicle (2) overlaps the highway delimitation (18-34) with a first, lesser degree of overlap (35) has a lower intensity than a warning signal assigned to a relative position in which a wheel (4-10) of the motor vehicle (2) overlaps the highway delimitation (18-34) with a second, higher degree of overlap.

5. The warning system according to one of the preceding claims, **characterized in that** the assignment of different intensities of warning signals to different relative positions is proportional.

6. The warning system according to one of the preceding claims, **characterized in that** a warning signal of a first type is assigned to a relative position in which a wheel (4-10) of the motor vehicle (2) at least partially covers the highway delimitation (18-34) and **in that** a warning signal of a second type is assigned to a relative position in which at least one wheel (4-10) of the motor vehicle (2) crosses the highway delimitation (18-34) completely.

7. The warning system according to one of the preceding claims, **characterized in that** at least one warning signal is acoustic.

8. The warning system according to one of the preceding claims, **characterized in that** at least one warning signal is optical.

9. The warning system according to one of the preceding claims, **characterized in that** at least one warning signal is haptic.

10. A method for operating a warning system according to one of the preceding claims, **characterized in that** the intensity of a warning signal is diminished or the output of a warning signal is terminated when at least one predeterminable reference condition (44, 46) is achieved.

11. The method according to claim 10, **characterized in that** the reference condition (44, 46) corresponds to the complete crossing of the highway delimitation (28-34) by at least one wheel (4-10) of the motor vehicle (2).

12. The method according to claim 10 or 11, **characterized in that** the reference condition (44, 46) corresponds to the complete crossing of the highway delimitation (28-34) by all wheels (4-10) of the motor vehicle (2).

13. The method according to one of the claims 10 to 12, **characterized in that** the reference condition (44, 46) corresponds to the lapse of a time period.

14. The method according one of the claims 10 to 13, **characterized in that** the reference condition (44, 46) corresponds to a minimum travelled distance.

## Revendications

1. Système d'alerte pour un véhicule automobile (2), comprenant un ensemble de capteurs (12) pour détecter la position du véhicule automobile (2) par rapport à une ligne de circulation (28 à 34) tracée sur une chaussée (20), une unité d'évaluation (14) couplée avec l'ensemble de capteurs (12), dans lequel l'unité d'évaluation (14) est couplée avec au moins une unité de sortie (16) et/ou au moins un actionneur (18) pour délivrer des signaux d'alerte à l'intention du conducteur, dans lequel différentes positions relatives du véhicule automobile (2) par rapport à une ligne de circulation (28 à 34) se voient attribuer des signaux d'alerte de type et/ou d'intensité différent(e), **caractérisé en ce que** l'ensemble de capteurs (12) et l'unité d'évaluation (14) sont réalisés pour déterminer le degré d'empiètement entre la roue (4 à 10) et la ligne de circulation (28 à 34), **en ce qu'**un signal d'alerte d'un premier type et/ou d'une première intensité est attribué à une position relative dans laquelle une roue (4 à 10) du véhicule automobile (2) empiète par endroits sur la ligne de circulation (28 à 34) avec un premier degré d'empiètement inférieur (35), **en ce qu'**un signal d'alerte d'un deuxième type et/ou d'une deuxième intensité est attribué à une position relative dans laquelle une roue (4 à 10) du véhicule automobile (2) empiète au moins par endroits sur la ligne de circulation (28 à 34) avec un deuxième degré d'empiètement supérieur (35).

2. Système d'alerte selon la revendication 1,
**caractérisé en ce que** les positions relatives à détecter comprennent au moins une position relative dans laquelle au moins une roue (4 à 10) du véhicule automobile (2) franchit complètement la ligne de circulation (28 à 34).

3. Système d'alerte selon au moins l'une des revendications précédentes, **caractérisé en ce qu'**une position relative dans laquelle une roue (4 à 10) du véhicule automobile (2) empiète sur la ligne de circulation (28 à 34) au moins par endroits se voit attribuer un signal d'alerte d'une intensité inférieure à celle d'une position relative dans laquelle au moins une roue (4 à 10) du véhicule automobile (2) franchit complètement la ligne de circulation (28 à 34).

4. Système d'alerte selon au moins l'une des revendications précédentes, **caractérisé en ce qu'**une position relative dans laquelle une roue (4 à 10) du véhicule automobile (2) empiète par endroits sur la ligne de circulation (28 à 34) avec un premier degré d'empiètement inférieur (35) se voit attribuer un signal d'alerte d'une intensité inférieure à celle d'une position relative dans laquelle une roue (4 à 10) du véhicule automobile (2) empiète au moins par endroits sur la ligne de circulation (28 à 34) avec un deuxième degré d'empiètement supérieur.

5. Système d'alerte selon au moins l'une des revendications précédentes, **caractérisé en ce que** l'attribution des différentes positions relatives à des signaux d'alerte d'intensité variable est proportionnelle.

6. Système d'alerte selon au moins l'une des revendications précédentes, **caractérisé en ce qu'**une position relative dans laquelle une roue (4 à 10) du véhicule automobile (2) empiète au moins par endroits sur la ligne de circulation (28 à 34) se voit attribuer un signal d'alerte d'un premier type, en **en ce qu'**une position relative dans laquelle au moins une roue (4 à 10) du véhicule automobile (2) franchit complètement de la ligne de circulation (28 à 34) se voit attribuer un signal d'alerte d'un deuxième type.

7. Système d'alerte selon au moins l'une des revendications précédentes, **caractérisé en ce qu'**au moins un signal d'alerte est de type acoustique.

8. Système d'alerte selon au moins l'une des revendications précédentes, **caractérisé en ce qu'**au moins un signal d'alerte est de type optique.

9. Système d'alerte selon au moins l'une des revendications précédentes, **caractérisé en ce qu'**au moins un signal d'alerte est de type haptique.

10. Procédé d'exploitation d'un système d'alerte selon au moins l'une des revendications précédentes, **caractérisé en ce que** l'intensité d'un signal d'alerte est atténuée ou la sortie du signal d'alerte est interrompue quand au moins un état de référence prédéfinissable (44, 46) est atteint.

11. Procédé selon la revendication 10, **caractérisé en ce que** l'état de référence (44, 46) correspond au franchissement complet de la ligne de circulation (28 à 34) par au moins une roue (4 à 10) du véhicule automobile (2).

12. Procédé selon la revendication 10 ou 11, **caractérisé en ce que** l'état de référence (44, 46) correspond au franchissement complet de la ligne de circulation (28 à 34) par toutes les roues (4 à 10) du véhicule automobile (2).

13. Procédé selon au moins l'une des revendications 10 à 12, **caractérisé en ce que** l'état de référence (44, 46) correspond à l'expiration d'une limite de temps.

14. Procédé selon au moins l'une des revendications 10 à 13, **caractérisé en ce que** l'état de référence (44, 46) correspond au fait qu'une distance minimale a été parcourue.
